# EUROPEAN PATENT SPECIFICATION

(11) **EP 2 445 331 B1**
(45) Date of publication and mention of the grant of the patent: **18.07.2018**
(21) Application number: 09845602.3
(22) Date of filing: 02.06.2009
(51) Int. Cl.: A01D 34/64, A01D 34/82, A01D 34/76

(54) **TELESCOPING OF CUTTING DECK**
AUSZIEHBARES MÄHWERK
MONTAGE TELESCOPIQUE DE CHASSIS DE COUPE

(43) Date of publication of application: 02.05.2012
(73) Proprietor: Husqvarna AB, 561 82 Huskvarna (SE)
(72) Inventor: CARLSSON, Daniel, S-432 76 Tvaaker (SE); SPÅNG, Joakim, S-556 32 Jönköping (SE); SCHYGGE, Sebastian, S-561 39 Huskvarna (SE); JONASSON, Henrik, S-561 41 Huskvarna (SE); ÅKESSON, Jonas, S-392 35 Kalmar (SE)
(74) Representative: Meissner Bolte Partnerschaft mbB
(86) International application number: PCT/SE2009/050644
(87) International publication number: WO 2010/140932

(56) References cited:
- EP-A1- 0 217 772
- FR-A1- 2 791 223
- US-A- 4 102 114
- US-A- 4 102 114
- US-A- 4 700 536
- US-A- 4 700 536
- US-A- 4 829 754
- US-A- 4 876 846
- US-A- 4 876 846
- US-A- 5 381 648
- US-A- 6 131 378
- US-A- 6 131 378
- US-B1- 6 481 194

## Description

### TECHNICAL FIELD

The present invention relates to lawn mowers. More particularly, it relates to attaching the cutting deck assembly with the main structure of the lawn mower in a manner that facilitates service and maintenance processes.

### BACKGROUND

Lawn mowers utilize rapidly rotating blades for cutting vegetation or grass to an even height. Each blade has a separate housing, which forms a part of a cutting deck assembly of the lawn mower. The cutting deck assembly can be front-mounted, rear-mounted, or mid-mounted with respect to the main lawn mower body. Front-mounted mowers are usually preferred for improved stability, maneuverability, and mowing performance.

Front-mounted cutting deck assembly of lawn mowers require regular servicing and maintenance for removing the vegetation or grass accumulated on the inside of the cutting deck, and further for cleaning and sharpening of the cutting blades. However, the part of the cutting deck assembly, which needs to be serviced, i.e., the underside, is inaccessible in the operating position. The inaccessibility of parts in a cutting deck assembly makes the servicing and maintenance a time consuming and inconvenient process that requires a skilled operator to clean and repair the parts.

To facilitate serviceability and the cleaning process of the cutting deck assembly, various tilting cutting deck assemblies have been proposed. In one proposed tilting deck system, the cutting deck assembly needs to be manually raised to an upright position with respect to the main structure of the lawn mower. This results in a time consuming and tedious process for the operator. In another related art, the cutting deck assembly is usually raised using an elaborate linkage mechanism, which results in an anti-clockwise rotation of the cutting deck assembly. However, the cutting deck assembly is not completely lifted from the ground in the upright position. Thus, auxiliary wheels are needed to support the cutting deck assembly during the tilting procedure as well as in the raised position.

Moreover, in tilting deck systems cutting deck assembly is often rigidly connected to the lawn mower. While some known cutting deck assemblies can be dismounted from the lawn mower, it is often time consuming to do so. Since, the cutting deck assembly cannot be separated from the main structure of the lawn mower, it is uneconomical for the users, as it is time consuming to clean the cutting deck assembly and it requires a skilled operator to clean and repair the cutting deck assembly parts.

Therefore, there is a need for an improved way of attaching the cutting deck assembly with the lawn mower structure to facilitate servicing and maintenance processes of'the cutting deck assembly.

The document EP 0 217 772 A1 discloses a riding mower comprising a chassis supporting a driving unit intended to propel the wheels of the mower as well as a cutting attachment which is provided on the mower. The cutting attachment is movably fastened to the chassis and can by means of an operating device be brought from a lower cutting position to an upper non cutting position. The mower has a movable part shaped as a guard which joins the chassis and at least partially hides the cutting attachment, the guard being connected to the cutting attachment in order to follow its movement.

### SUMMARY

In view of the above, the object of this invention is to solve or at least reduce the problems discussed above. In particular, an objective is to provide a novel combination of cutting deck assembly with the lawn mower, which solves the problem of service and Maintenance process of the lawn mower.

This is achieved with a removably secured attachment of the cutting deck assembly with a lawn mower, in which the cutting deck assembly comprises an elongated attachment portion adapted for sliding engagement with the support member of the main structure to form a rigidly secured mounting of the cutting deck assembly to the main structure and to enable a sliding dismounting of the cutting deck assembly from the main structure. Since, the attachment portion of the cutting deck assembly can be easily detached from the main structure of the lawn mower, it is easy to process the cleaning and repair operation on the underside of the cutting deck assembly.

The attachment portion includes first and second members, which are adapted to telescopically fit to corresponding holders on the support member of the main structure. The first and second members are secured to the corresponding holders of the support arm, by means of friction in the telescopic arrangement. In an aspect of the invention, since the telescopic arrangement remains locked due to friction during the operation of the lawn mower, there is no need of any other locking mechanism to hold the cutting deck assembly with the main structure of the lawn mower.

Advantageously, the first member and the second member are pivotable about a pivot axis. Moreover, the wheel assembly and the attachment portion of the cutting deck are also pivotable about the pivot axis of the cutting deck assembly. In an aspect of the present invention, since the first and second members are pivotable, they are able to fold up towards the ground and thus, act as stand support arms to bring the cutting deck assembly in an upright position. Further, the upright position provides a trouble- free accessibility to the cutting blades for cleaning and repair purposes.

According to the advantageous embodiment, the cutting deck assembly comprises a pulley assembly and a cutter blade assembly. The pulley assembly receives a belt drive from the main structure of the lawn mower to drive the cutter blade assembly. In an aspect of the invention, the tension developed by a spring in the belt drive also contributes to the locking mechanism of the telescoping arrangement between the cutting deck assembly and the main structure of the lawn mower.

Further, the belt drive can be easily released, which will unlock the sliding engagement between the attachment portion of the cutting deck assembly and the support member of the main structure. Thus, the cutting deck assembly can be pulled out as a separate unit from the main structure of the lawn mower. In an aspect of the invention, since the cutting deck assembly is completely separated from the main structure, the cleaning and repairing of the parts is easily done by virtue of maneuverability in terms of transportation and inspection. Moreover, a completely separable cutting deck assembly is also advantageous in aspects of repair and maintenance of the main structure of the lawn mower.

According to a further advantageous embodiment, the cutting deck assembly comprises a wheel assembly, an outer frame and a top cover. The first member and the second member are rigidly secured to the wheel assembly and the outer frame. In an aspect of the invention, the wheel assembly is provided to avoid any damage to the cutting blades due to scalping, when the lawn mower is operating on an uneven surface.

According to a further advantageous embodiment, the outer frame and the top cover envelop the cutter blade assembly and the pulley assembly respectively. In an aspect of the invention, the '.:op cover and the outer frame prevents the pulley assembly and the cutting blade assembly from any damage that may be cause by foreign objects such as stones, dust etc. In a further aspect of the invention, the outer frame and the top cover provide an aesthetic look to the cutting deck assembly.

According to a further advantageous embodiment, the cutting deck assembly comprises a height adjustment assembly. The height adjustment assembly adjusts a cutting height of the cutter blade assembly. In an aspect of the invention, the cutter blade assembly may regulate its cutting height according to the need of the terrain.

According to a further advantageous embodiment, the height adjustment assembly comprises a lover portion and a sectored arrangement. The lever portion is utilized to set different cutting heights as required, by means of the sectored arrangement, which provides pre-defined positions for various cutting heights that can be attained by the cutting deck assembly.

In an overall aspect of the invention, the lawn mower with front mounted cutting deck assembly has an inherent advantage as practically no resistance is imposed by any other part of the lawn mower while disengaging the cutting deck assembly. Also, use of a releasable sliding engagement between the cutting deck assembly and the main structure saves time, labor and money involved in the cleaning or maintenance processes. Further, the releasable sliding engagement between the cutting deck assembly and the main structure also enables an easy re-mounting of the cutting deck assembly after cleaning, service or replacement. Moreover, the described arrangement of the cutting deck assembly with the lawn mower provides a valuable economic impact on the business of lawn mowers.

### BRIEF DESCRIPTION OF THE DRAWINGS

The invention will be described in more detail in the following, with reference to the enclosed drawings in which:
Figure 1 shows a perspective view of a lawn mower, according to an embodiment of the present invention; and
Figure 2 shows a perspective view of a cutting deck assembly of the lawn mower, according to an embodiment of the present invention.

### DESCRIPTION OF EMBODIMENTS

The present invention will be described more fully hereinafter with reference to the accompanying drawings, in which preferred embodiments of the invention are shown. This invention may, however, be embodied in many different forms herein; rather, these embodiments are provided so that this disclosure will be thorough and complete, and will fully convey the scope of the invention to those skilled in the art. In the drawings, like numbers refer to like references.

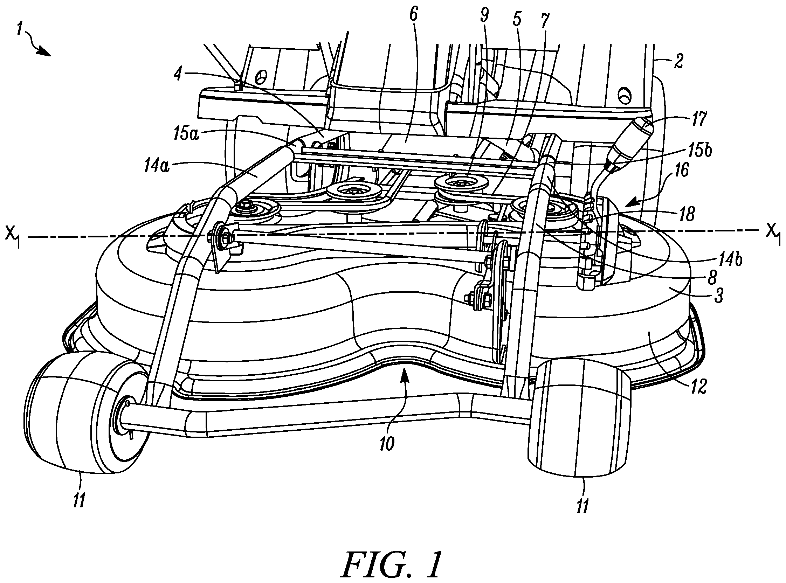

Figure 1 shows a perspective view of a lawn mower 1, according to an embodiment of the present invention. In an embodiment of the present invention, the lawn mower 1 is a ride-on lawn mower having a movement in the forward direction. The lawn mower 1 comprises a main structure 2 and a front mounted cutting deck assembly 3. The main structure 2 of the lawn mower 1 comprises an operator chair, an engine assembly and a set of four wheels. The engine assembly is used to drive the rear wheels of the lawn mower 1 through a preferred transmission mechanism (not shown). Moreover the other components such as steering wheel, control panel (not shown), foot pedals and other necessary parts are provided at preferred locations on the main structure 2 to facilitate easy accessibility to an operator sitting on the operator chair. Depending on the application and design constraints of the lawn mower 1, the other components in the main structure 2 are positioned to achieve stability and efficiency during the operating and idle states of the lawn mower 1. However, only a front portion of the main structure 2 is shown in the figure 1 and other parts such as operator chair, engine assembly, rear wheels, steering wheel, control panel and foot pedals etc are omitted for the sake of clarity.

As shown in the figure 1, the main structure 2 of the lawn mower 1 further comprises an elongated support member 4, which is connected to a chassis 5 of the lawn mower 1. The support member 4 holds the cutting deck assembly 3 in an operable position. The main structure 2 also comprises a receptacle portion 6 to direct a belt drive 7 to the cutting deck assembly 3. Further, the cutting deck assembly 3 comprises an elongated attachment portion 8. The attachment portion 8 of the cutting deck assembly 3 is adapted to have a sliding engagement with the support member 4 of the main structure 2. The attachment portion 8 facilitates a rigidly secured mounting of the cutting deck assembly 3 with the support member 4 of the main structure 2. Moreover, the presence of the sliding engagement between the attachment portion 8 and the support member 4 enables the cutting deck assembly 3 to remain attached to the main structure 2 during operating conditions. Moreover, the sliding engagement between the attachment portion 8 and the support member 4 also enables a sliding dismounting of the cutting deck assembly 3 from the main structure 2 of the lawn mower 1.

As shown in the figure 1, the cutting deck assembly 3 further comprises a pulley assembly 9 and a cutting blade assembly 10. The pulley assembly 9 is operable to receive the belt drive 7 from the receptacle portion 6 of the lawn mower 1 to drive the cutting blade assembly 10. The pulley assembly 9 and the cutting blade assembly 10 are supported on a chassis of the cutting deck assembly 3 such that one or more cutting blades (not shown) are provided in the cutting blade assembly 10 underneath the cutting deck assembly 3. Moreover, the cutting deck assembly 3 of the lawn mower 1 can be symmetric or asymmetric depending on the applications and design criterion of the lawn mower 1. However, incase of the asymmetric cutting deck assembly 3 the cutting blades need not be synchronized for operation. The cutting deck assembly 3 further comprises a top cover that envelopes the cutting blade assembly 10 and protects it from any foreign objects such as dust, stones etc. For the sake of clarity, top cover is omitted from the figure 1.

In an embodiment of the present invention, the belt drive 7, which is engaged with the pulley assembly 9 and the cutting blade assembly 10, holds the cutting deck assembly 3 and the main structure 2 together by ensuring the precise mounting of the attachment portion 8 with the support member 4. Further, the belt drive 7 can be easily released, and thus unlocks the sliding engagement between the attachment portion 8 of the cutting deck assembly 3 and the support member 4 of the main structure 2. Thus, the cutting deck assembly 3 can be pulled out as a separate unit from the main structure 2 of the lawn mower 1, which facilitates the cleaning and repairing of the parts by virtue of maneuverability in terms of transportation and inspection. Moreover, a completely separable cutting deck assembly 3 is also advantageous in aspects of repair and maintenance of the main structure 2 of the lawn mower 1.

Moreover, lawn mower 1 with front mounted cutting deck assembly 3 has an inherent advantage as practically no resistance is imposed by any other part of the lawn mower 1 while disengaging the cutting deck assembly 3. Also, use of a releasable sliding engagement between the cutting deck assembly 3 and the main structure 2 saves time, labor and money involved in the cleaning or maintenance processes. The releasable sliding engagement between the cutting deck assembly 3 and the main structure 2 also enables an easy re-mounting of the cutting deck assembly 3 after cleaning, service or replacement.

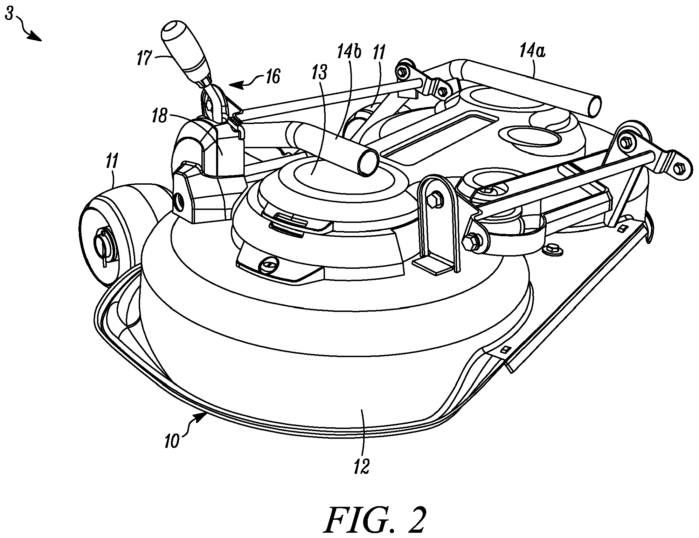

Figure 2 shows a perspective view of the cutting deck assembly 3, according to an embodiment of the present invention. As shown in the figure 2, the cutting deck assembly 3 comprises a wheel assembly 11, which includes a pair of wheels to avoid scalping of the ground when the lawn mower 1 moves over uneven surfaces during operation. The cutting deck assembly 3 further comprises an outer frame 12 and a top cover 13. The outer frame 12 and the top cover 13 envelopes the cutting blade assembly 10 the pulley assembly 9 to prevent the pulleys and the blades from any harm or damage due to foreign objects such as dust, stone etc. The outer frame 12 and the top cover 13 are supported on the chassis of the cutting deck assembly 3.

As shown in figure 2, the attachment portion 8 of the cutting deck assembly 3 further comprises: a first member 14a and a second member 14b. The first member 14a and the second member 14b are rigidly secured to the wheel assembly 11 and the outer frame 12 of the cutting deck assembly 3. The first member 14a and the second member 14b are the elongated part of the attachment portion 8 of the cutting deck assembly 3. Correspondingly, the support member 4 of the main structure 2 also comprises elongated parts: a first holder 15a and a second holder 15b (shown in figure 1) . The first and second members 14a and 14b of the cutting deck assembly 3 fit telescopically with the first and second holders 15a and 15b respectively of the main structure 2 to enable a rigid mounting structure.

In an embodiment of the present invention, the first and second members 14a and 14b are utilized as stand support arms for bringing the cutting deck assembly 3 to an upright position, after dismounting the cutting deck assembly 3 from the main structure 2. The whole structure of the attachment portion 8, including wheel assembly 11, first and second members 14a and 14b, is pivotable about a pivot axis (X1) (the pivot axis is shown in figure 1) in the cutting deck assembly 3. Since, the whole structure is pivotable, the first and second members 14a and 14b can fold out towards the ground to work as stand support arms for the dismounted cutting deck assembly 3. In another embodiment of the present invention, separate stand support arm(s) may be provided to hold the cutting deck assembly 3 in the upright position. In an aspect of the present invention, the upright position provides a trouble-free accessibility to the cutting blades for cleaning and repair purposes.

In an embodiment of the present invention, a spring (not shown) that holds the belt drive develops sufficient tension to maintain the telescopic fitting between secured in place during operation of the lawn mower 10. Moreover, the friction in the telescoping fitting also contributes to maintain a rigid mounting of the attachment portion 8 with the support arm 4 of the main structure 2. In another embodiment of the present invention, a locking mechanism may also be provided in the first member 14a and the second member 14b to hold the respective holders 15a and 15b and thus maintain the cutting deck assembly 3 and the main structure 2 in a locked position during operation. Further, a mechanism may also be provided to loosen the belt drive 7, for example, allowing a slight displacement in the pulley assembly 9 that may release the belt drive 7 and thus the telescoping fit can be disengaged without the need of complex and expensive tools. Moreover, the cutting deck assembly 3 is also provided with some easy gripping members such as handles (not shown) at appropriate locations to facilitate an easy pulling of the cutting deck assembly 3.

As shown in the figure 2, the cutting deck assembly 3 also comprises a height adjustment assembly 16. The height adjustment assembly comprises a lever portion 17 and a sectored arrangement 18. The height adjustment assembly 16 is utilized to adjust a cutting height of the cutter blade assembly 10. In an embodiment of the present invention, the cutting height may be pre-defined for various terrains such as lawns, hilly areas, slope terrains etc. The sectored arrangement 18 provides various positions defining pre-defined cutting heights, which can be fixed for the cutter blade assembly 10 by means of the lever portion 17.

In an overall embodiment of the present invention, the time to reassemble the cutting deck assembly 3 with the main structure 2 is also reduced to a great extent. Moreover, the simplicity of the sliding engagement of the cutting deck assembly 3 and the main structure 2, by means of the telescopic arrangement, enables reduced production time and can have a valuable economic impact on the business of lawn mowers.

In the drawings and specifications, there have been disclosed preferred embodiments and examples of the invention and, although specific terms are employed, they are used in a generic and descriptive sense only and not for the purpose of limitation, the scope of the invention being set forth in the following claims.

### Parts List

| |
|---|
| Lawn-mower 1 |
| Main structure 2 |
| Cutting deck assembly 3 |
| Elongated support member 4 |
| Chassis 5 |
| Receptacle portion 6 |
| Belt drive 7 |
| Elongated attachment portion 8 |
| Pulley assembly 9 |
| Cutting blade assembly 10 |
| Wheel assembly 11 |
| Outer frame 12 |
| Top cover 13 |
| First member 14a |
| Second member 14b |
| First holder 15a |
| Second holder 15b |
| Height adjustment assembly 16 |
| Lever portion 17 |
| Sectored arrangement 18 |
| Pivot axis (X1) |

## Claims

1. A ride-on lawn mower (1) comprising a main structure (2), a front mounted cutting deck assembly (3), a belt drive (7), and a pulley assembly (9), wherein the main structure (2) comprises an elongated support member (4) for supporting the cutting deck assembly (3) in an operable position, wherein the cutting deck assembly (3) comprises an elongated attachment portion (8) adapted for sliding engagement with the support member (4) of the main structure (2) to form a rigidly secured mounting of the cutting deck assembly (3) to the main structure (2) and to enable a sliding dismounting of the cutting deck assembly (3) from the main structure (2), wherein engagement of the belt drive (7) with the pulley assembly (9) holds the cutting deck assembly (3) and the main structure (2) together, **characterized in that** the elongated attachment portion (8) comprises a first member (14a) and a second member (14b), and wherein the first member (14a) and the second member (14b) end portions are tailored to telescopically fit to corresponding holders (15a, 15b) on the elongated support member (4).

2. The ride-on lawn mower (1) as claimed in claim 1, wherein the first member (14a) and the second member (14b) is pivotable about a pivot axis (X1) and wherein the first member (14a) and the second member (14b) act as stand support arms for the dismounted cutting deck assembly (3).

3. The ride-on lawn mower (1) as claimed in any one of claim 1-2, wherein the cutting deck assembly (3) further comprises a pulley assembly (9) and a cutter blade assembly (10), and wherein the pulley assembly (9) is able to receive a belt drive (7) from the main structure (2) to drive the cutter blade assembly (10).

4. The ride-on lawn mower (1) as claimed in any one of claim 1-3, wherein the cutting deck assembly (3) further comprises a wheel assembly (11), an outer frame (12) and a top cover (13).

5. The ride-on lawn mower (1) as claimed in claim 4, wherein the outer frame (12) and the top cover (13) envelop the cutter blade assembly (10) and the pulley assembly (9) respectively.

6. The ride-on lawn mower (1) as claimed in any one of claim 1-5, wherein the cutting deck assembly (3) further comprises a height adjustment assembly (16) and wherein the height adjustment assembly (16) adjusts a cutting height of the cutter blade assembly (10).

7. The ride-on lawn mower (1) as claimed in claim 6, wherein the height adjustment assembly (16) comprises a lever portion (17) and a sectored arrangement (18) and wherein the sectored arrangement (18) provides pre-defined positions defining various cutting heights for the cutting blade assembly (10).

8. The ride-on lawn mower as claimed in any one of claims 1-7, wherein releasing the belt drive (7) unlocks the sliding engagement between the attachment portion (8) of the cutting deck assembly (3) and the support member (4) of the main structure (2).

9. The ride-on lawn mower as claimed in any one of claims 1-8, wherein the cutting deck assembly (3) comprises gripping members to facilitate pulling of the cutting deck assembly (3) from sliding engagement with the support member (4) of the main structure (2).

## Patentansprüche

1. Aufsitzrasenmäher (1), der eine Hauptstruktur (2), eine vorn angebrachte Mähwerk-Baugruppe (3), einen Riemenantrieb (7) und eine Scheibenbaugruppe (9) umfasst, wobei die Hauptstruktur (2) ein längliches Stützelement (4) zum Stützen der Mähwerk-Baugruppe (3) in einer funktionsfähigen Position umfasst, wobei die Mähwerk-Baugruppe (3) einen länglichen Befestigungsabschnitt (8) umfasst, der zum Gleiteingriff mit dem Stützelement (4) der Hauptstruktur (2) eingerichtet ist, um eine starr befestigte Anbringung der Mähwerk-Baugruppe (3) an der Hauptstruktur (2) zu bilden und um ein gleitendes Abbauen der Mähwerk-Baugruppe (3) von der Hauptstruktur (2) zu ermöglichen, wobei ein Eingriff des Riemenantriebs (7) mit der Scheibenbaugruppe (9) die Mähwerk-Baugruppe (3) und die Hauptstruktur (2) zusammenhält, **dadurch gekennzeichnet, dass** der längliche Befestigungsabschnitt (8) ein erstes Element (14a) und ein zweites Element (14b) umfasst und wobei die Endabschnitte des ersten Elements (14a) und des zweiten Elements (14b) dafür zugeschnitten sind, teleskopartig an entsprechende Halter (15a, 15b) an dem länglichen Stützelement (4) zu passen.

2. Aufsitzrasenmäher (1) nach Anspruch 1, wobei das erste Element (14a) und das zweite Element (14b) um eine Schwenkachse (X1) schwenkbar sind und wobei das erste Element (14a) und das zweite Element (14b) als Ständerstützarme für die abgebaute Mähwerk-Baugruppe (3) wirken.

3. Aufsitzrasenmäher (1) nach einem der Ansprüche 1 bis 2, wobei die Mähwerk-Baugruppe (3) ferner eine Scheibenbaugruppe (9) und eine Schneidklingen-Baugruppe (10) umfasst und wobei die Scheibenbaugruppe (9) dazu in der Lage ist, einen Riemenantrieb (7) von der Hauptstruktur (2) aufzunehmen, um die Schneidklingen-Baugruppe (10) anzutreiben.

4. Aufsitzrasenmäher (1) nach einem der Ansprüche 1 bis 3, wobei die Mähwerk-Baugruppe (3) ferner eine Radbaugruppe (11), einen äußeren Rahmen (12) und eine obere Abdeckung (13) umfasst.

5. Aufsitzrasenmäher (1) nach Anspruch 4, wobei der äußere Rahmen (12) und die obere Abdeckung (13) die Schneidklingen-Baugruppe (10) beziehungsweise die Scheibenbaugruppe (9) umschließen.

6. Aufsitzrasenmäher (1) nach einem der Ansprüche 1 bis 5, wobei die Mähwerk-Baugruppe (3) ferner eine Höheneinstellungsbaugruppe (16) umfasst und wobei die Höheneinstellungsbaugruppe (16) eine Schneidhöhe der Schneidklingen-Baugruppe (10) einstellt.

7. Aufsitzrasenmäher (1) nach Anspruch 6, wobei die Höheneinstellungsbaugruppe (16) einen Hebelabschnitt (17) und eine mit Sektoren versehene Anordnung (18) umfasst und wobei die mit Sektoren versehene Anordnung (18) vordefinierte Positionen bereitstellt, die verschiedene Schneidhöhen für die Schneidklingen-Baugruppe (10) definieren.

8. Aufsitzrasenmäher nach einem der Ansprüche 1 bis 7, wobei ein Lösen des Riemenantriebs (7) den Gleiteingriff zwischen dem Befestigungsabschnitt (8) der Mähwerk-Baugruppe (3) und dem Stützelement (4) der Hauptstruktur (2) entriegelt.

9. Aufsitzrasenmäher nach einem der Ansprüche 1 bis 8, wobei die Mähwerk-Baugruppe (3) Greifelemente umfasst, um das Ziehen der Mähwerk-Baugruppe (3) aus dem Gleiteingriff mit dem Stützelement (4) der Hauptstruktur (2) zu erleichtern.

## Revendications

1. Tondeuse à gazon autoportée (1) comprenant une structure principale (2) et un ensemble de châssis de coupe monté à l'avant (3), un entraînement par courroie (7) et un ensemble de poulies (9), dans laquelle la structure principale (2) comprend un élément de support allongé (4) pour supporter l'ensemble de châssis de coupe (3) dans une position opérationnelle, dans laquelle l'ensemble de châssis de coupe (3) comprend une partie de fixation allongée (8) adaptée pour s'engager de façon coulissante avec l'élément de support (4) de la structure principale (2) afin de former un montage fixe rigide de l'ensemble de châssis de coupe (3) sur la structure principale (2) et à permettre un démontage par coulissement de l'ensemble de châssis de coupe (3) à partir de la structure principale (2), dans laquelle un engagement de l'entraînement par courroie (7) avec l'ensemble de poulies (9) maintient l'ensemble de châssis de coupe (3) et la structure principale (2) assemblés, **caractérisée en ce que** la partie de fixation allongée (8) comprend un premier élément (14a) et un second élément (14b), et dans laquelle des parties d'extrémité du premier élément (14a) et du second élément (14b) sont conçues sur mesure de manière à s'agencer de façon télescopique sur des supports correspondants (15a, 15b) sur l'élément de support allongé (4).

2. Tondeuse à gazon autoportée (1) selon la revendication 1, dans laquelle le premier élément (14a) et le second élément (14b) sont pivotants autour d'un axe de pivotement (XI), et dans laquelle le premier élément (14a) et le second élément (14b) agissent comme des bras de support verticaux pour l'ensemble de châssis de coupe (3) démonté.

3. Tondeuse à gazon autoportée (1) selon l'une quelconque des revendications 1 à 2, dans laquelle l'ensemble de châssis de coupe (3) comprend en outre un ensemble de poulies (9) et un ensemble de lame de coupe (10), et dans laquelle l'ensemble de poulies (9) est capable de recevoir un entraînement par courroie (7) à partir de la structure principale (2) afin d'entraîner l'ensemble de lame de coupe (10).

4. Tondeuse à gazon autoportée (1) selon l'une quelconque des revendications 1 à 3, dans laquelle l'ensemble de châssis de coupe (3) comprend en outre un ensemble de roue (11), un cadre extérieur (12) et un couvercle supérieur (13).

5. Tondeuse à gazon autoportée (1) selon la revendication 4, dans laquelle le cadre extérieur (12) et le couvercle supérieur (13) enveloppent l'ensemble de lame de coupe (10) et l'ensemble de poulies (9), respectivement.

6. Tondeuse à gazon autoportée (1) selon l'une quelconque des revendications 1 à 5, dans laquelle l'ensemble de châssis de coupe (3) comprend en outre un ensemble de réglage de hauteur (16), et dans laquelle l'ensemble de réglage de hauteur (16) règle une hauteur de coupe de l'ensemble de lame de coupe (10).

7. Tondeuse à gazon autoportée (1) selon la revendication 6, dans laquelle l'ensemble de réglage de hauteur (16) comprend une partie de levier (17) et un agencement sectoriel (18), et dans laquelle l'agencement sectoriel (18) fournit des positions prédéfinies qui définissent différentes hauteurs de coupe pour l'ensemble de lame de coupe (10).

8. Tondeuse à gazon autoportée selon l'une quelconque des revendications 1 à 7, dans laquelle le relâchement de l'entraînement par courroie (7) déverrouille l'engagement coulissant entre la partie de fixation (8) de l'ensemble de châssis de coupe (3) et l'élément de support (4) de la structure principale (2).

9. Tondeuse à gazon autoportée selon l'une quelconque des revendications 1 à 8, dans laquelle l'ensemble de châssis de coupe (3) comprend des éléments d'agrippement destinés à faciliter le retrait de l'ensemble de châssis de coupe (3) de son engagement coulissant avec l'élément de support (4) de la structure principale (2).
